Europäisches Patentamt

European Patent Office

Office européen des brevets

(19)

(11) Veröffentlichungsnummer: **0 082 449**
**B1**

# EUROPÄISCHE PATENTSCHRIFT

(12)

(45) Veröffentlichungstag der Patentschrift:
**12.03.86**

(21) Anmeldenummer: **82111511.0**

(22) Anmeldetag: **11.12.82**

(51) Int. Cl.⁴: **G 01 C 19/16**, G 01 C 19/38,
F 16 C 11/00

(54) **Universell bewegliches Aufhängungsteil.**

(30) Priorität: **12.12.81 DE 3149326**

(43) Veröffentlichungstag der Anmeldung:
**29.06.83 Patentblatt 83/26**

(45) Bekanntmachung des Hinweises auf die Patenterteilung:
**12.03.86 Patentblatt 86/11**

(84) Benannte Vertragsstaaten:
**FR GB IT**

(56) Entgegenhaltungen:
**DE - A - 2 259 853**
**DE - A - 3 011 727**
**FR - A - 2 376 311**
**FR - A - 2 471 525**
**US - A - 3 545 231**

**THE MARINE ENGINEER AND NAVAL ARCHITECT,
Band 84, Nr. 1023, August 1961, Seite 1000, Maidstone,
G.B. "A new Plath gyro compass"**

(73) Patentinhaber: **Anschütz & Co. G.m.b.H., Mecklenburger
Strasse 32-36, D-2300 Kiel-Wik (DE)**

(72) Erfinder: **Bey, Ulf, Dipl.-Ing., Busdorfer Weg 8,
D-2351 Grossharrie (DE)**
Erfinder: **Lässig, Martin, Am Wohld 1, D-2300 Kiel 1 (DE)**

(74) Vertreter: **Baumann, Eduard, Dipl.-Phys.,
Postfach 1201 Sattlerstrasse 1,
D-8011 Höhenkirchen/München (DE)**

## Beschreibung

Die Erfindung bezieht sich auf ein universell bewegliches Aufhängungsteil für ein die Nordrichtung weisendes Anzeigegerät, insbesondere für ein Kreiselsystem, gemäss dem Oberbegriff des Anspruches 1.

Ein derartiges Aufhängungsteil für Kreiselsysteme wurde in der DE-A-3011727 für ein Kreiselsystem vorgeschlagen. Bei diesem System erfolgt die eigentliche Aufhängung des Kreiselsystems nicht an einem Balg, sondern an einem Pendel, das an einem Kugellager in der Drehscheibe angeordnet ist. Das Pendel ist im Abstand von einem Balg umgeben, dessen oberer Rand an einer Drehscheibe und dessen unterer Rand an einer Ringscheibe befestigt ist. An der Verlängerung des Pendels nach oben ist ein Körper angeordnet, der sich in einem mit Dämpfungsflüssigkeit gefüllten Behälter bewegt. Die Befestigung des unteren Endes des Pendels am Pendelsystem erfolgt über eine schwingungsdämpfende Federungseinrichtung. Zwischen dem unteren Ende des Pendels und dem Kreiselsystem ist weiterhin ein aufwendiges horizontales Verschiebesystem vorgesehen, das kugelgelagert ist. Auf diese Weise ist auch eine horizontale Verschiebung des Kreiselsystemes möglich.

Das in der DE-A-3011727 beschriebene Verfahren ist relativ aufwendig und damit teuer. Insbesondere das nach oben sich erstreckende Pendelsystem erfordert auch einen ziemlichen Platzbedarf.

Der Erfindung liegt die Aufgabe zugrunde, ein Aufhängungsteil für ein die Nordrichtung weisendes Anzeigegerät gemäss dem Oberbegriff des Anspruches 1 so auszubilden, dass trotz zuverlässiger und genauer Anzeige das Bauvolumen verkleinert und die Herstellung verbilligt wird.

Die Aufgabe wird erfindungsgemäss durch die Merkmale des Kennzeichens des Anspruches 1 gelöst. Weitere Ausbildungen der Erfindung sind in den Unteransprüchen dargestellt.

Eine Anwendung liegt in der Realisierung der für Magnetkompasse, Tochterkompasse und ähnliche Anwendungen erforderlichen kardanischen Aufhängung.

Die bevorzugte Anwendung ist jedoch diejenige zur Aufhängung eines Kreiselsystems an der Drehscheibe, die mit der Kompassrose verbunden ist und gegenüber der Schiffsverbindung drehbar angeordnet ist. Die Elastizitäts- beziehungsweise Federungseigenschaften bewirken ohne Einwirken äusserer Kräfte eine Rückstellung in die Ausgangslage.

Für eine derartige Anwendung als Pendelgelenk werden gleichzeitig folgende Forderungen erfüllt:

– eine kardanische Aufhängung
– eine Abkoppelung von horizontalen Vibrationen, herrührend von der Befestigung am Schiffs-körper,
– Federungseigenschaften in vertikaler Rich-tung, und damit Unempfindlichkeit gegenüber Vertikalbewegungen des Schiffes,

– eine Dämpfung von Pendelschwingungen bei Roll- und Stampfbewegungen des Schiffes,
– die praktisch winkelfehlerfreie Übertragung von Drehmomenten bei Roll- und Stampfbewegungen des Schiffes.

Bei einer bevorzugten Ausführungsform wird der Innendurchmesser des Doppelbalges so gross gewählt, dass sich im inneren Freiraum das gesamte Kreiselsystem oder ein grosser Teil desselben, also Hüllkugel mit Pumpe und schwimmender Kugel, unterbringen lässt. Dadurch ergeben sich folgende weitere Vorteile gegenüber bekannten Kreiselsystemen:

– die Gesamtlänge und damit auch die Gesamtpendellänge ist wesentlich kürzer; der Pendeldrehpunkt des Doppelbalges liegt zwischen dem oberen Drittel und der Hälfte der Balglänge in Bezug zur oberen Balgaufhängung.
– bei gleichem Freiheitsgrad der Aufhängung kann der Durchmesser und die Länge des Aussengehäuses kleiner gehalten werden,
– die Anzahl der erforderlichen Bauteile für das Gesamtkreiselsystem ist geringer,
– mechanische Verschleissteile gegenüber dem Stand der Technik, insbesondere dem Gegenstand der DE-A-3011727, entfallen,
– das Gesamtsystem ist erheblich billiger in der Herstellung.

Die Konstruktion der Erfindung ermöglicht es auch, auf ein zusätzliches Dämpfungssystem oberhalb der Drehscheibe sowie auf ein Abfede-rungs-Dämpfungssystem zwischen Pendelauf-hängung und Kreiselsystem zu verzichten. Auch auf eine Spezialeinrichtung für eine horizontale Verschiebung des Kreiselsystems kann verzichtet werden. Weiterhin kann auf eine Pendelaufhängung verzichtet werden.

Durch diese starke Vereinfachung entfallen insbesondere eine Reihe von Verschleissteilen wie Kugellager, Druckfedern oder Rollenlagern als Einrichtung für eine horizontale Verschiebung, gegebenenfalls Wartungsvorgänge usw.

Dennoch zeigte sich, dass eine derartige Aufhängung einen vollwertigen Ersatz für eine Kardanaufhängung darstellt und eine Wirkungsweise ähnlich erheblich teureren Aufhängungen erzie-len lässt. Der Balg selbst übernimmt in diesem Falle nicht nur die Übertragung eines Drehmoments zwischen Kompassrose und Kreiselsystem, sondern auch die Funktion der Aufhängung selbst, wobei eine Beweglichkeit des Kreiselsystems in allen drei Richtungen besteht, so dass das Kreiselsystem bei Schräglage des Fahrzeuges, insbesondere des Schiffes, stets seine vertikale Lage beibehalten kann.

Beim bevorzugten Ausführungsbeispiel sind zwei Einzelbälge an den Enden fest und abdichtend miteinander verbunden, sodass sich ein Zwischenraum ergibt, der vorzugsweise mit Siliconöl aufgefüllt ist. In den einzelnen Falten des Doppelbalges sind Stützringe vorgesehen. Um einen Flüssigkeitsdurchtritt zu ermöglichen, haben diese Stützringe Bohrungen. Bei axialer Belastung des Doppelbalges bewirkt die dadurch entstehende Änderung des Innendruckes in Abhängigkeit von der Elastizität des Balgmaterials, vorzugsweise Gummi, eine definierte axiale Längenänderung. Je nach Wahl des Materials von Balg und gegebenenfalls auch Flüssigkeit lässt sich konstruktiv die gewünschte Axial-Sollfederkennlinie schaffen. Bei einer winkelmässigen oder Pendelbeanspruchung unterliegt die Flüssigkeit einer seitlichen Verschiebung. Je nach gewählter Viskosität wirkt die Flüssigkeit dabei als Dämpfungsmittel. Bei einer seitlichen Verschiebung in kleinen Bereichen tritt eine kaum nennenswerte Verformung des Flüssigkeitsvolumens und damit auch keine Dämpfung auf. Auf diese Weise wird eine seitliche Abkoppelung erreicht, d.h. eine seitliche Verschiebung in kleinen Bereichen z.B. durch Vibrationen hat keinen Einfluss auf das Kreiselsystem. Das Material des Doppelbalges, der durch die Stützringe verstärkt ist, kann man so wählen, dass man eine hohe Torsionssteifigkeit des Aufhängungsteiles und dadurch bedingt die Möglichkeit, grosse Drehmomente zu übertragen, erhält. Darüberhinaus bleibt das Aufhängungsteil bei axialer Belastung sowohl gegenüber seitlichen Verschiebungen als auch winkelmässigen Auslenkungen in unveränderter Weise flexibel.

Ein Ausführungsbeispiel der Erfindung ist in der Zeichnung dargestellt.

Es zeigt:

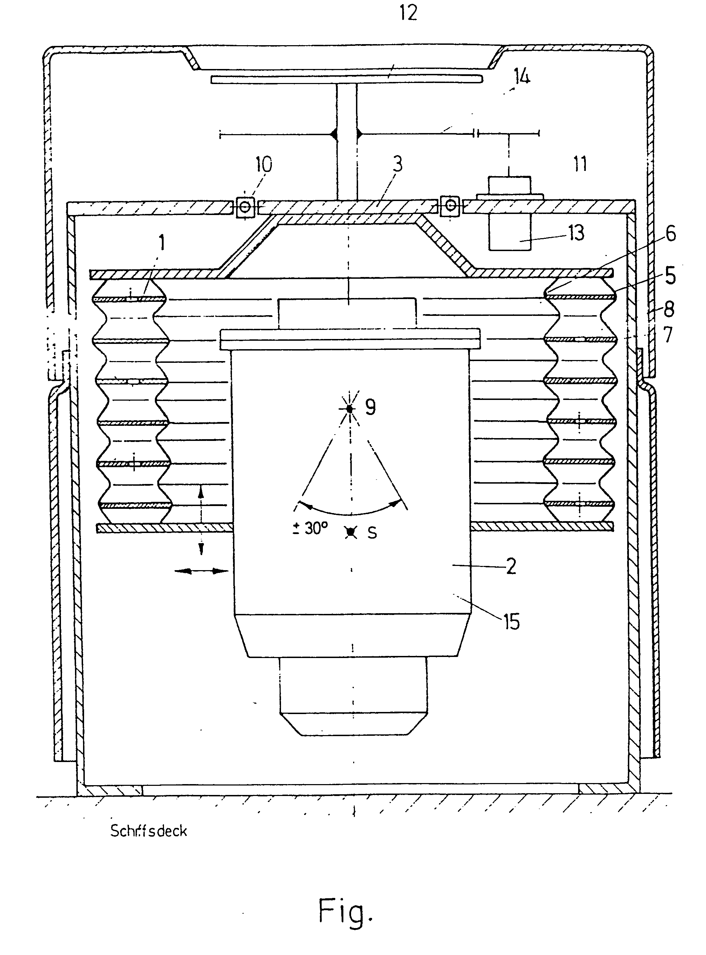

Figur 1 ein Aufhängungsteil für ein Kreiselsystem mit Windrose und Befestigungseinrichtungen am Schiff.

In der Zeichnung besteht die eigentliche Aufhängung aus dem Doppelbalg 1 mit einer nach aussen gerichteten Falte 5 und einer gegenläufig nach innen angeordneten Balgfalte 6. Die Balgfalte selbst ist mit 7 bezeichnet und enthält die Dämpfungsflüssigkeit. In den beiden inneren Faltbereichen einer Balgfalte 7 ist ein Stützring 8 angeordnet.

Der Balg ist oben an der Drehscheibe 3 befestigt, unten ist die Hüllkugel 15 mit den Abtastelementen an den Balg 1 angehängt. Das freie Kreiselsystem befindet sich innerhalb der Hüllkugel 15.

Im Punkt 9 ist ein Drehpunkt eingezeichnet. Abhängig vom Material, Abmessungen und Anwendungsbereich liegt etwa in diesem Bereich der Drehpunkt, wenn sich Schiffsbewegungen einstellen, beispielsweise ein Rollen oder Stampfen des Schiffes. In solchen Fällen bleibt das Kreiselsystem 2 senkrecht und raumfest, während sich die obere Aufhängung um den Drehpunkt 9 pendelartig bewegt. Etwa an der Verbindungsstelle zwischen Kreiselsystem 2 und Aufhängung in Form des Doppelbalges 1 ist der Schwerpunkt S eingezeichnet. Die Aufhängung ermöglicht Pendelbewegungen von ± 30 Grad, die Doppelpfeile zeigen eine translatorische und eine seitliche Verschiebemöglichkeit an.

Die Drehscheibe 3 ist im übrigen über ein Kugellager 10 mit der Schiffsbefestigung 11 verbunden. An der Schiffsbefestigung 11 ist ein Nachführmotor 13 für die Kompassrose 12 vorgesehen, welche die Kompassrose 12 über ein vorzugsweise aus Zahnrädern und dergleichen bestehendes Nachführsystem 14 antreibt. Der Nachführmotor 13 wird im übrigen in üblicher Weise von den Spannungsausschlägen des Kreiselsystems 2 gesteuert, die an diesem abgegriffen werden (nicht gezeigt). Die auf diese Weise nachgeführte Kompassrose stellt mittels des balgförmigen Aufhängungsteiles die daran befestigte Hüllkugel 15 dem Kreiselsystem 2 nach, entsprechend den Steuersignalen am Nachführmotor 13.

Die vorstehend beschriebene Konstruktion beinhaltet eine Reihe spezieller Merkmale, welche die Wirkung ausmachen. Durch die Anordnung der Stützringe 8 in den Balgfalten 7 wird das Absinken des Balges 1 weitgehend verhindert. Ein (erwünschtes) Absinken ist nur insoweit möglich, als es das flexible Balgmaterial erlaubt. Bei Rolloder Stampfbewegungen des Schiffes bewegt sich das Oberteil des Aufhängungsteiles pendelförmig. Auf der einen Seite wird dadurch die Dämpfungsflüssigkeit zusammengedrückt und strömt auf die gegenüberliegende Seite. Auf diese Weise wird eine Dämpfung der Aufhängung erzielt. Die Eigenschaften des Balges erlauben ausserdem eine gewisse horizontale Verschiebung der Aufhängung, ohne dass eine aufwendige horizontale Verschiebeinrichtung erforderlich wäre. Die Dämpfung ist bei Zug- und Druckbelastung gleich wirksam. Schliesslich ist durch die balgförmige Aufhängung auch eine sehr wirksame Dämpfung von Schiffsvibrationen möglich.

Die über den Schiffskörper und die starre Kugellagerung 10 auf die Oberseite der balgförmigen Aufhängung 1 übertragenen Vibrationen werden durch den Balg so stark gedämpft, dass praktisch keine Vibrationen auf das darunter aufgehängte Kreiselsystem 2 übertragen werden.

**Patentansprüche**

1. Aufhängungsteil für ein die Nordrichtung weisendes Anzeigegerät, das in alle Richtungen schwenkbar und translatorisch verschiebbar ist, dadurch gekennzeichnet, dass das Aufhängungsteil als Doppelbalg mit zwei gegenläufig gefalteten Bälgen (5, 6) ausgebildet ist.

2. Aufhängungsteil nach Anspruch 1, dadurch gekennzeichnet, dass in jeder Balgfalte (7) ein mit Drosselbohrungen versehener Stützring (8) angeordnet ist.

3. Aufhängungsteil nach Anspruch 1 und Anspruch 2, dadurch gekennzeichnet, dass der zwischen den zwei Bälgen (5, 6) gebildete Raum mit Flüssigkeit gefüllt ist.

4. Aufhängungsteil nach einem der Ansprüche 1 bis 3, dadurch gekennzeichnet, dass als Material für den Balg (1) Gummi, federndes Metall, Polytetrafluoräthylen oder elastischer Kunststoff verwendet wird.

5. Aufhängungsteil nach einem der Ansprüche 1 bis 4, dadurch gekennzeichnet, dass das Material für den Stützring Messing, Aluminium, Kunststoff oder mit Gewebe verstärkter Kunststoff wie Glasfaser verstärkter Kunststoff verwendet wird.

6. Aufhängungsteil nach einem der Ansprüche 1 bis 5, dadurch gekennzeichnet, dass als Flüssigkeit für den Doppelbalg Glycerin oder vorzugsweise Siliconöl verwendet wird, wobei die Flüssigkeit je nach gewählter Viskosität als Dämpfungsmittel wirkt.

7. Aufhängungsteil nach einem der Ansprüche 1 bis 6, dadurch gekennzeichnet, dass es in einem als Kreiselsystem (2) ausgebildeten Anzeigegerät verwendbar ist.

## Claims

1. A suspension member for suspending a north-indicating instrument adapted for rotation in every direction and for translatory movement, characterised in that the suspension member is a double bellows unit including two oppositely folded bellows (5, 6).

2. A suspension member as claimed in claim 1, characterised in that each bellows fold (7) has a support ring (8) disposed therein which is provided with throttling bores.

3. A suspension member as claimed in claim 1 and claim 2, characterised in that the space defined between the two bellows (5, 6) is filled with liquid.

4. A suspension member as claimed in any of the claims 1 to 3, characterised in that the material used for the bellows (1) is rubber, spring metal, polytetrafluoroethylene or elastic plastics material.

5. A suspension member as claimed in any of the claims 1 to 4, characterised in that the material used for the support ring is aluminium, plastics material or fabricsreinforced plastics material such as glass-fibre reinforced plastics.

6. A suspension member as claimed in any of the claims 1 to 5, characterised in that the liquid used for the double bellows is glycerin or preferably silicone fluid, wherein the liquid acts as damping agent in accordance with the selected viscosity.

7. A suspension member as claimed in any of the claims 1 to 6, characterised in that it is adapted for use in an indicating instrument that is a gyro system (2).

## Revendications

1. Dispositif de suspension pour un appareil indiquant le nord susceptible de pivoter dans toutes les directions et d'être déplacé de manière translatoire, caractérisé en ce que le dispositif est un double soufflet composé de deux soufflets (5, 6) pliés en sens opposé l'un de l'autre.

2. Dispositif de suspension selon la revendication 1, caractérisé en ce que un anneau de soutien (8) muni de trous d'étranglement est disposé dans chaque plissure (7) du soufflet.

3. Dispositif de suspension selon la revendication 1, caractérisé en ce que l'espace intermédiaire compris entre les deux soufflets (5, 6) est rempli d'un liquide.

4. Dispositif de suspension selon l'une des revendications 1 à 3, caractérisé en ce que le matériau utilisé pour le soufflet (1) est du caoutchouc, un métal élastique, du polytétrafluoréthylène ou une matière plastique élastique.

5. Dispositif de suspension selon l'une des revendications 1 à 4, caractérisé en ce que le matériau utilisé pour l'anneau de soutien est du laiton, de l'aluminium, une matière plastique ou une matière plastique renforcée d'une fibre comme la fibre de verre.

6. Dispositif de suspension selon l'une des revendications 1 à 5, caractérisé en ce que le liquide utilisé pour remplir l'espace intermédiaire entre les deux soufflets est de la glycérine ou de préférence de l'huile de silicone, le liquide faisant effet d'amortisseur selon le degré de viscosité choisi.

7. Dispositif de suspension selon l'une des revendications 1 à 6, caractérisé en ce que qu'il est utilisable pour un appareil indicateur commandé par un système gyroscopique (1).

12

Schiffsdeck

Fig.